# EUROPEAN PATENT APPLICATION

(11) **EP 2 592 781 A1**
(43) Date of publication of application: **15.05.2013**
(21) Application number: 10854366.1
(22) Date of filing: 08.07.2010
(51) Int. Cl.: H04L 12/24

(54) **METHOD AND SYSTEM FOR MANAGING NETWORK TOPOLOGIES IN HOME NETWORKS**

(71) Applicant: Telefónica, S.A., 28013 Madrid (ES)
(72) Inventor: ALONSO ÁLVAREZ, Valentín, E-28013 Madrid (ES); GALLEGOS PAJARES, David, E-28013 Madrid (ES); RODRÍGUEZ GOLVANO, Eduardo M., E-28013 Madrid (ES); DÁVILA ÁLVAREZ, Pablo, E-28013 Madrid (ES)
(74) Representative: Gonzalez-Alberto Rodriguez, Natalia
(86) International application number: PCT/ES2010/070470
(87) International publication number: WO 2012/004424

(57) **Abstract**

The present invention relates to a method and a system for managing network topologies in home networks. Said invention is integrated in an execution environment available in at least one device in a home network and has at least one interface publication service. The invention comprises a network topology management module (3), a local device management module (9), a data management module (7) comprising a network topology database storing the home network topology, at least one device type network topology management module (4, 5, 6), a notification module (8) and at least one protocol adapter (10, 11, 12).

## Description

### Object of the Invention

As expressed in the title of this specification, the present invention relates to a method and a system for managing network topologies in home networks. The field of application of the invention is network management, specifically client network management and more specifically digital home management.

### Background of the Invention

The proliferation of new services and devices connected in the digital home involves new challenges both for service providers or operators and for end users, so their management has become a very important topic.

Some Broadband Forum (BBF) standards, such as TR-069, PD-174 or HGI (Home Gateway Initiative), provide the elements necessary for representing all the information that network operators can obtain from a client network, showing only the final representation of the information. Other protocols (such as UPnP, Samba, specific home automation protocols, etc.) can also be used for managing the home devices from within LAN itself, said protocols being limited to the home environment.

There is currently only one product, Cisco Network Magic (CNM), that implements some management functionalities in the home network. This solution is based on the existence of a PC in the home network and has been developed using a protocol designed by Cisco©. Cisco Network Magic uses home network administration protocols (HNAP) to administer devices and provides a software development kit for users to create their own HNAP management applications. It is a protocol that allows programming, configuring, managing and presenting reports on the network.

However, the solutions existing today have important deficiencies. In the inventions belonging to the state of the art, only operators can remotely manage the broadband router, using BBF TR-069 protocols, and sometimes some devices such as IP telephones or devices responsible for receiving and optionally decoding an analog or digital television signal, with a specific TR-069 extension, such as TR-106 and TR-135. This means that it is difficult to activate and manage new services involving other end users connected to devices, such as PCs, servers or a device responsible for receiving and optionally decoding an analog or digital television signal, mobile telephones, IP cameras, etc.

Management complexity for users and businesses must be reduced, such that it is possible to improve the user's experience and the time it takes to launch a product on the market and the operating expenses of new devices and services on the business side.

In recent years, due to the absence of suitable remote administration tools, end users always had to call the corresponding technical services when there was a problem with their devices or services which most of the time resulted in an operator having to visit user's home.

Standards such as TR-069 or PD-174 do not provide the architecture and the mechanisms necessary for obtaining this information without involving the user. None of these standards offer any technical proposal or solution for solving the control, diagnosis and repair of home networks.

Protocols such as UPnP, Samba or specific home automation protocols are not interoperable with remote administration protocols (for example, TR-069). Besides, different device types need different management tools, i.e., there is not one unified tool for accessing most common device types existing in the home.

Solutions which try to manage these complexities such as Cisco Network Magic are not open and do not correctly use the established standards; furthermore, this one specifically has been designed to cover only Cisco's requirements. This product does not cover the current lack of technical solutions of this type in operator infrastructures.

### Description of the Invention

To achieve the objectives and prevent the drawbacks indicated above, the invention consists of a method and a system for managing network topologies in home networks.

This invention will facilitate home network management both for the end user and for the operator, both when configuring the service and when executing it because it provides the mechanisms to other tools for discovering, viewing and managing the devices connected in the home in an easy and efficient manner.

The basic concept of the invention is to provide a functional element in the home network, more specifically in the residential gateway, which is capable of performing the following tasks:
- Discovering the devices connected at home using different protocols and storing the network topology (i.e., all the discovered devices, their information and the services they offer).
- Keeping the network topology updated by means of receiving events generated by the devices connected to said network or performing surveys about them.
- Invoking the devices, for example, configuration operations, updating their information, accessing their services, etc.
- Offering standardized interfaces such that other tools can access the network topology information, subscribe to change events in the topology and invoke operations in the devices. One example could be a local application which allows showing and managing home devices, or a TR-069 proxy which is capable of communicating the network topology to remote auto-configuration server, ACS.

Therefore, as has already been mentioned above, on one hand the invention comprises a system for managing network topologies in home networks where the mentioned system is integrated in an execution environment available in the devices which are connected to a home network. An interface publication service must be provided for the correct operation of the invention.

Said system thus comprises:
- a network topology management module comprising means for coordinating the remaining modules of the system, means for detecting devices connected to the home network by means of interaction with at least one protocol adapter and means for storing and managing home network topology information by means of interaction with a data management module;
- a local device management module comprising providing at least one interface so that the network topology management module establishes communication with the devices connected to the home network and additionally comprising means for notifying the network topology management module of changes in the home network topology;
- a data management module comprising a network topology database storing the home network topology, means for managing said database and additionally comprising a data management interface for communicating with the network topology management module;
- at least one device type network topology management module comprising a mapping management interface whereby the network topology management module obtains device information with respect to the devices connected to the home network. In a preferred embodiment, this module will be selected from a UPnP module, a non-IP home automation module and an IP module supporting IP protocols exclusively.
- a notification module sending notifications to modules external to the system which have previously subscribed to said notifications when changes occur in the network topology by means of an NTM event capture interface provided by the network topology management module; and,
- at least one protocol adapter comprising a conventional interface for communicating with the devices connected to the home network. In a preferred embodiment, these protocol adapters will be selected from a UPnP protocol adapter handling UPnP devices by means of a UPnP protocol, a home automation protocol adapter managing non-IP home automation devices by means of a home automation proxy using standard protocols and an IP protocol adapter managing IP devices, which support IP protocols exclusively, by means of an ARP protocol.

In a preferred embodiment, the network topology management module in turn provides the following interfaces to modules or entities external to the system:
- an NTM description interface comprising modules external to the system obtaining a list of devices detected in the home network and information about such devices stored in the network topology database;
- an NTM device control interface comprising modules external to the system accessing services provided by the devices connected to the home network; and,
- an NTM event capture interface implemented by external modules for receiving notifications of new devices connected to the home network, devices disconnected from the home network and changes in said device information stored in the network topology database.

In another preferred embodiment, the local device management module provides the following interfaces to the system:
- an LDM publication capture interface reporting events selected from devices which are connected to the home network and devices which are disconnected from the home network;
- an LDM description interface providing detailed device information with respect to the devices which are connected to the home network to those devices requesting said information; and,
- an LDM control interface requesting services provided by the devices connected to the network.

Furthermore, in another preferred embodiment the protocol adapters provide the system with the following interfaces:
- an AP publication capture interface implemented by the local topology management module for receiving notifications of changes in the devices sent from the at least one protocol adapter;
- an AP layer description interface implemented by the local topology management module for directly receiving device information with respect to the devices connected to the home network;
- an AP layer control interface implemented by the local topology management module for managing the services offered by the home network devices; and,
- an AP layer event interface implemented by the local topology management module for receiving notifications of changes in state variables in home network devices.

On the other hand, the present invention also describes a method for managing network topology in home networks for the system defined above comprising the following phases:
- the network topology management module detecting events selected from devices which are connected to the home network and devices which are disconnected from the home network. Protocol adapters integrated in the system are used to that end. The detected devices will be selected from physical devices and virtual devices;
- storing device information with respect to the devices detected in the home network in the network topology database by means of the data management module;
- sending notifications about detected devices and the modifications in said detected device information stored in the network topology database to modules external to the system previously subscribed to said notifications;
- any other module external to the system obtaining device information with respect to any device connected to the home network by means of accessing the home network topology database whenever said other external module requests it; and,
- requesting the execution of services offered by one of the devices connected to the home network from any other module external to the system.

In a preferred embodiment, when a device connected to the home network has previously been detected by means of one of the protocol adapters, the following steps are carried out during the phase of device detection:
- sending a notification from the protocol adapter that has detected the device connected to the home network to the local device management module;
- forwarding said notification from the local device management module to the network topology management module;
- the network topology management module requesting information about additional protocols, data and services supported by the detected device from the corresponding device type network topology management module depending on the detected device type;
- forwarding said request from the device type network topology management module to the protocol adapter that has detected the device so that it can request the requested information from the detected device through the local device management module;
- sending said information from the protocol adapter to the network topology management module through the local device management module;
- sending said information from the network topology management module to the management module;
- the management module checking which device type has been detected, said device type being selected from a new physical device, a new virtual device and a previously detected device, and storing the information received from the topology management module in the preceding step in the network topology database through the data management module; and,
- sending a notification that a new device has been detected in the topology from the network topology management module to the notification module sending notifications to modules external to the system by means of the notification module.

In another preferred embodiment, in the phase of checking which device type has been detected and storing the information relating to said device, the detected device can be a new physical device, a virtual device or it can be a device that had already been previously detected regardless of whether it was a physical or virtual device. When the detected device is a physical device, said phase comprises the following sub-phases:
- the data management module receiving a notification with information relating to the detected device;
- checking that the MAC address of the detected device is not stored in the network topology database;
- verifying that the IP address of the detected device is stored in the network topology database;
- verifying that the MAC address of the detected device is blank;
- storing the information relating to the detected device in the network topology database;
- verifying that the detected device is an IP-type device and storing the information relating to the detected device in the network topology database when the MAC address is not blank;
- checking that the IP address of the detected device is not stored in the network topology database and if the detected device type is not previously stored in the network topology database, storing the information relating to the detected device in the network topology database;
- storing the information relating to the detected device in the network topology database when it is not an IP device and when the detected device type is additionally not previously stored in the network topology database; and,
- storing the information relating to the detected device in the network topology database when it has been verified that the device type exists and neither its identifier nor its serial number is stored in said database.

On the other hand, when the detected device is a virtual device it comprises the following sub-phases:
- the data management module receiving a notification with information relating to the new detected device;
- verifying that the MAC address of the detected device is stored in the network topology database;
- checking that the detected device is not an IP-type device;
- verifying that the device type is previously stored in the network topology database and storing the information relating to the detected device in the network topology database when neither its identifier nor its serial number is previously stored in said database; and,
- storing the information relating to the detected device in the network topology database when it is obtained in the preceding phase of verification that the device type is not previously stored in the network topology database.

If the device was already previously detected it comprises the following sub-phases:
- the data management module receiving a notification with information relating to the new detected device;
- verifying that the detected device has a MAC address and additionally verifying that it is an IP-type device and updating the information relating to the device in the network topology database;

- verifying that the MAC address of the detected device is stored in the network topology database and if it is not an IP-type device, verifying that it is of a type previously registered in the network topology database, and additionally verifying that its identifier is stored in said database, and then updating the information relating to the device in the network topology database;
- verifying that the MAC address of the detected device is stored in the network topology database and if it is not an IP-type device, verifying that it is of a type previously registered in the network topology database, and further verifying that its serial number is stored if its identifier is not stored in said database, to update the information relating to the device in the network topology database;
- verifying that the MAC address of the detected device is not stored in the network topology database, that the IP address of the detected device is not stored in said database, that the device type is registered in the database and that additionally the identifier is also registered, and then updating the information relating to the device in the network topology database; and,
- verifying that the MAC address of the detected device is not stored in the network topology database, that the IP address of the detected device is not stored in said database, that the device type is registered in the database and additionally verifying that the serial number of said device is registered if the identifier is not registered, and then updating the information relating to the device in the network topology database.

In another preferred embodiment, after the phase of the data management module verifying that the device has not been previously detected, when it is obtained that the device is already previously detected, it comprises the following phases:
- updating the obtained device information in the network topology database through the data management module to which the obtained device information is sent from the network topology management module; and,
- sending a notification that a change has occurred in the information stored in the home network topology database from the network topology management module to the notification module, which in turn sends notifications to modules external to the system by means of the notification module.

In another preferred embodiment, the phase of obtaining device information in turn comprises the following steps:
- at least one module external to the system sending an information request to the network topology management module by means of the NTM description interface;
- sending a device information request to the data management module by means of the data management interface provided by said data management module;
- accessing said information stored in the network topology database and sending the information to the network topology management module; and,
- sending said information from the network topology management module to the module external to the system that has requested the information.

In another preferred embodiment, the phase of requesting the execution of services offered by the devices connected to the home network comprises the following steps:
- sending a service request from a module external to the system to the network topology management module by means of the NTM device control interface;
- sending said request from the network topology management module to the local device management module by means of the LDM control interface;
- sending said request from the local device management module to the corresponding protocol adapter by means of the PA interface control interface; and,
- sending said request from the corresponding protocol adapter to the device offering the requested service.

In another preferred embodiment, when the at least one device type topology management module is started for the first time, it registers a mapping management interface in the system in which the device type it manages is specified, said device type being selected from a UPnP device, an IP device and a non-IP home automation device.

In another preferred embodiment, as a phase prior to detecting devices using the home network, the network topology management module registers a network topology management interface in the system whereby the elements internal and external to the system invoke said system.

In another preferred embodiment, as a phase prior to detecting devices which are connected to the home network, the notification module registers a notification interface in the system whereby it notifies modules external to the system of changes in the network topology.

In another preferred embodiment, in the phase of storing information in the network topology database, said database comprises the following information for each detected home network device:
- a device identifier;
- a device summary comprising the functionalities implemented by said device;
- device type information, said information being selected from IP devices, UPnP devices and non-IP home automation devices;
- a device state identifying the device state selected from enabled, disabled and error;
- at least one local area network interface comprising the LAN interfaces of each device, where a device MAC address and a device IP address are stored for each interface; and,
- a listing of virtual devices comprising the virtual devices existing at the same time in the physical device.

In another preferred embodiment, each memory position of the listing of virtual devices comprises at least the following information:
- a device identifier;
- device state information, said information being selected from enabled, disabled and error;
- virtual device type information, said information being selected from IP devices, UPnP devices and non-IP home automation devices;
- virtual device sub-type information;
- manufacturer information comprising the manufacturer's name;
- model information comprising the device model name;
- model number information comprising the device model number;
- device serial number information;
- device UDN information when it is a virtual UPnP device;
- additional information comprising a list of additional device parameters; and,
- a listing of services offered by the device.

In another preferred embodiment, each memory position of the listing of services comprises at least the following information:
- a service identifier; and,
- a listing of processes offered by the service where a name, a listing of input arguments and a listing of output arguments, each of these arguments having an assigned name, are stored for each process.

In another preferred embodiment, the information stored in the network topology database is obtained and stored based on at least:
- a basic configuration information file comprising a list of properties of the home network devices, a list of values for being established in the network topology for each device, and a method for obtaining basic information common to all the devices registered in the network topology database; and,
- a rule-based additional configuration information file stored in a field called additional information, comprising a list of rules and defining a method for obtaining specific additional device information with respect to each device registered in the network topology database.

In another preferred embodiment, when said device is a UPnP-type device, the virtual device sub-type is selected from a media player, a media server and a wireless network camera.

In another preferred embodiment, when said device is a home automation-type device, the virtual device sub-type is selected from a smart meter, a smart connector and a switch.

In another preferred embodiment, the virtual device sub-type is an IP sub-type when said device is an IP-type device.

The invention herein includes the following improvements with respect to the existing solutions:
- It facilities discovering and managing not only the broadband router, but also the home network topology.
- It offers and updated overview of the home network. This information can be used locally by the end user (by means of other applications) for managing the home network or can be sent to an ACS, such that remote operators know which devices the end user has at a given time and can handle them.
- It gives persistence to the network topology information, which allows having device information with respect to all the network devices, even if some of them are not connected.
- It offers an extensible architecture which allows supporting different protocol types for managing different device types, all under the same umbrella. External applications do not need to deal with the complexities of the protocol for discovering and managing home devices.

### Brief Description of the Drawings

Figure 1 shows the main functional block diagram of the home network topology manager.
Figure 2 shows the basic information configuration file diagram.
Figure 3 shows the additional information configuration file diagram.
Figure 4 shows the network topology management algorithm flow chart.
Figure 5 shows the diagram of how information relating to the network topology physical devices is stored in the database.
Figure 6 shows the diagram of how information relating to the network topology virtual devices is stored in the database.
Figure 7 shows the diagram of how information relating to the services offered by the network topology devices is stored in the database.

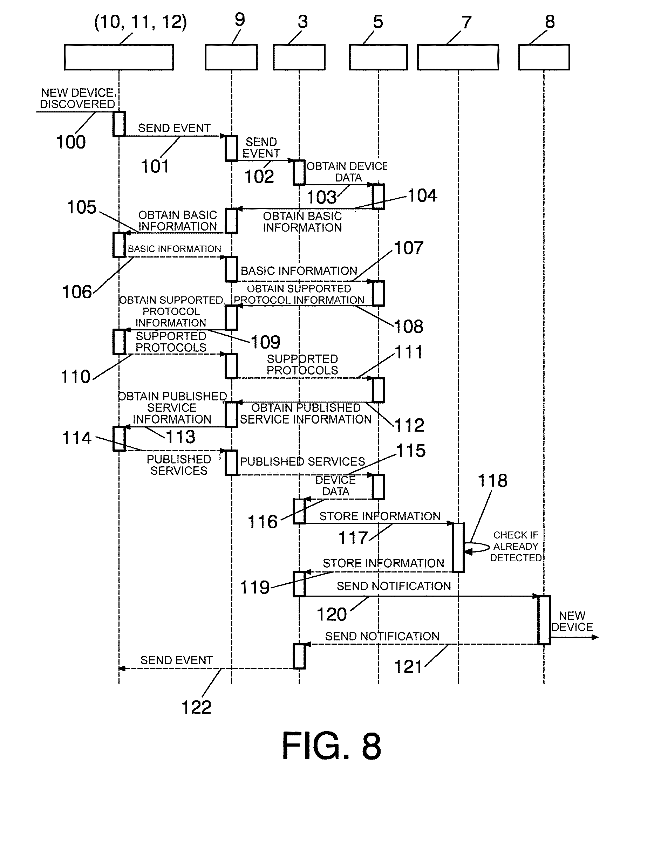

Figure 8 shows the device detection sequence diagram.
Figure 9 shows the sequence diagram relating to obtaining device information.
Figure 10 shows the sequence diagram relating to requesting the services offered by the devices.

### Description of an Embodiment of the Invention

The description of an embodiment of the invention is provided below with an illustrative and non-limiting character using the reference numbers used in the drawings.

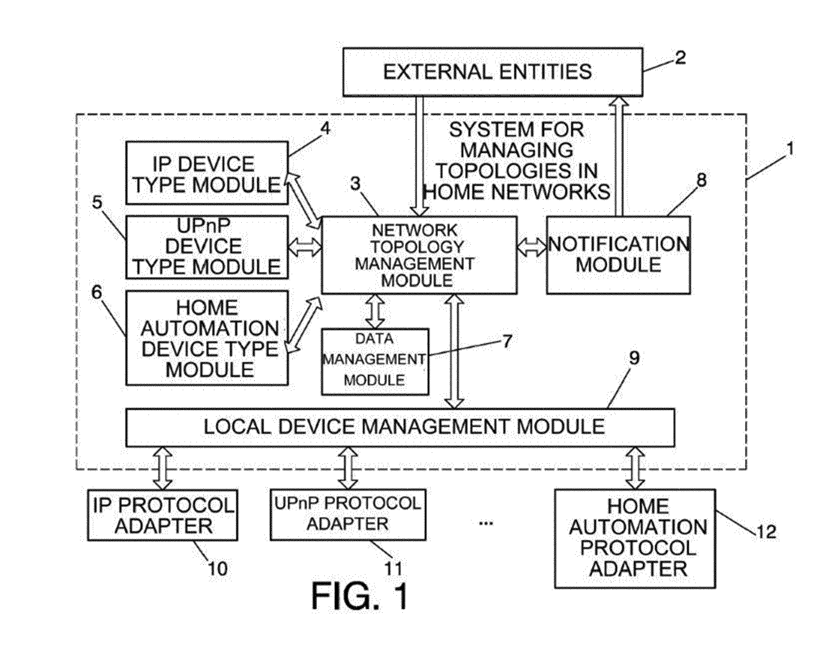

Figure 1 shows the main functional block diagram of the home network topology manager (1). The different modules forming said manager communicate with one another through known interfaces, and there are also interfaces with external entities (2) using the functionalities provided by the home network topology manager. The execution environment of the invention providing an interface publication service, such that the different modules can publish their interfaces in the system so that different external modules or entities (2) can make requests or receive notifications.

The network topology manager module (3), hereinafter NTM module, is the primary module of the system. It acts as a coordinator for the remaining modules of the system that allows discovering, storing and managing network topology information.

This element (3) is only the core and implements the most generic logic for coordinating the remaining modules, but it needs the help of device type modules (4, 5, 6) for managing a specific device type.

When starting up the system the NTM module (3) executes the following steps:
- It registers its interface in the system, such that other internal or external entities can invoke it.
- The LDM publication capture interface is implemented to allow the NTM module (3) to be notified by the local device management module (7), hereinafter LDM module, of the changes in the home network topology (new devices connected to the home network or existing devices disconnected from the initial network).
- It searches for an implementation of the NTM data management interface in the system. This interface is provided by the NTM module (3) and will later be used to store the discovered device data.

The NTM module (3) acts as follows: when a notification indicating the discovery of a new device is received, it obtains the identifier and device type from the actual notification and searches for a module in the system that implements the NTM mapping management interface which is capable of working with that device type. This interface is provided by the device type modules (4, 5, 6). As a result of this interface, the NTM module obtains from the specific device type modules (4, 5, 6) the device data set that has already been transformed into the generic format to be stored in the network topology. This information will finally be stored in the network topology by means of the data management module (7).

The NTM module also provides interfaces which allow other external entities (2) to access network topology information, obtaining information about a device, invoking an action in a device, etc. Examples of external entities interested in such operations could be a local application which shows the end user the network topology in a graphical user interface, or a TR-069 Proxy that could convert the topology information into a TR-069 tree and send it to an ACS, such that a remote operator can know in time real the network topology of the end user and be capable of handling it.

The primary interfaces presented by this NTM module (3) are as follows:
- NTM description interface: this interface is used by external entities (2) for obtaining the list of the devices found and the information stored about such devices in the network topology.
- NTM device control interface: this interface allows external entities to invoke services offered by the devices for the purpose of controlling them.
- NTM event capture interface: this is the interface that external entities need to implement and register in the system to be notified about the existence of new devices and changes in the stored device information with respect to already existing devices.

The device type modules (4, 5, 6) implement the specific logic needed by the NTM module (3) in order to handle each specific device type, such as knowing what type of information is obtained for a device of each type when it is discovered, how to process this information and how to store it in the network topology.

All this logic is separate from the NTM module so that the system is extensible and said NTM module can be capable of working with new device types in the future without needing to modify the logic of the NTM module itself.

In a preferred embodiment, the system has envisaged three device types, but this list could be increased for a specific application. Said devices are: UPnP devices, non-IP home automation devices and IP devices that are not compatible with any other specific protocol type.

When one of the device type modules (4, 5, 6) is started, it registers its implementation of the NTM mapping management interface with a property indicating the device type it can manage. The NTM module can thus identify it and use it when a device of that type shows up in the network.

The functionality of these modules is based on two configuration files:
- Basic configuration information file: specifies how to obtain basic discovered device information. This basic information is common to all the devices.
- Additional configuration information file: stores how to obtain additional information that could also be of interest, usually specific to each device type.

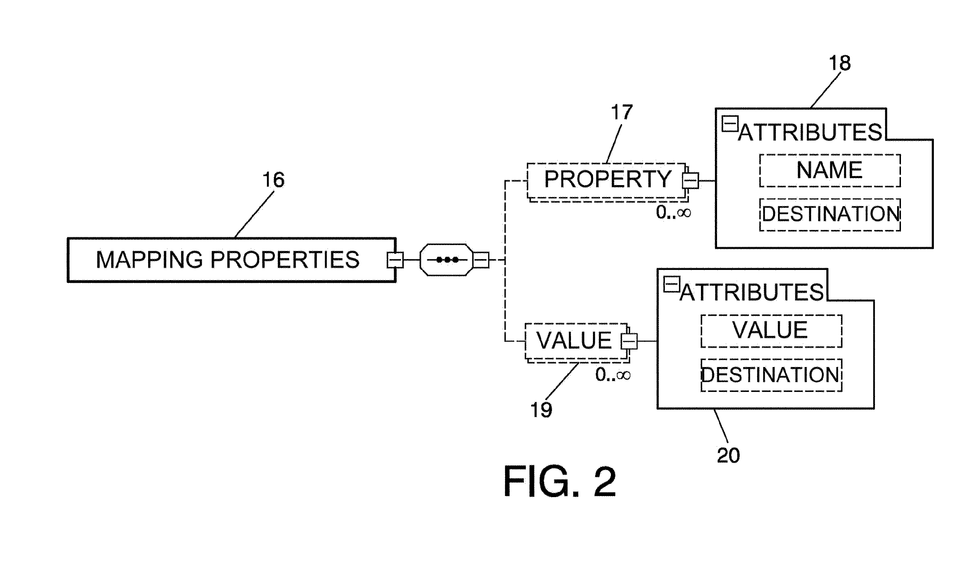

The definition of the basic information configuration file is shown in Figure 2. It defines some assignments in the object "mapping properties" (16), defining a list of properties (17) that are obtained from the device and stored in the network topology and a list of values (19) that will be set for the device in the network topology:
- For each "property" (17) of the list, the value of the property of the device the "name" (18) of which is specified will be stored in the topology, specifically in the property defined as "destination" (18) within the "virtual device information" (72) which is a network topology node.
- Each "value" (19) of the list is used to assign static values to some properties of a specific device type which do not provide a value for some of the aspects included in the "virtual device information" (72). The "value" (20) determined is stored in the network topology in the property defined as "destination" (20).

The additional information configuration file defines the information that is stored in the device information "additional information" field.

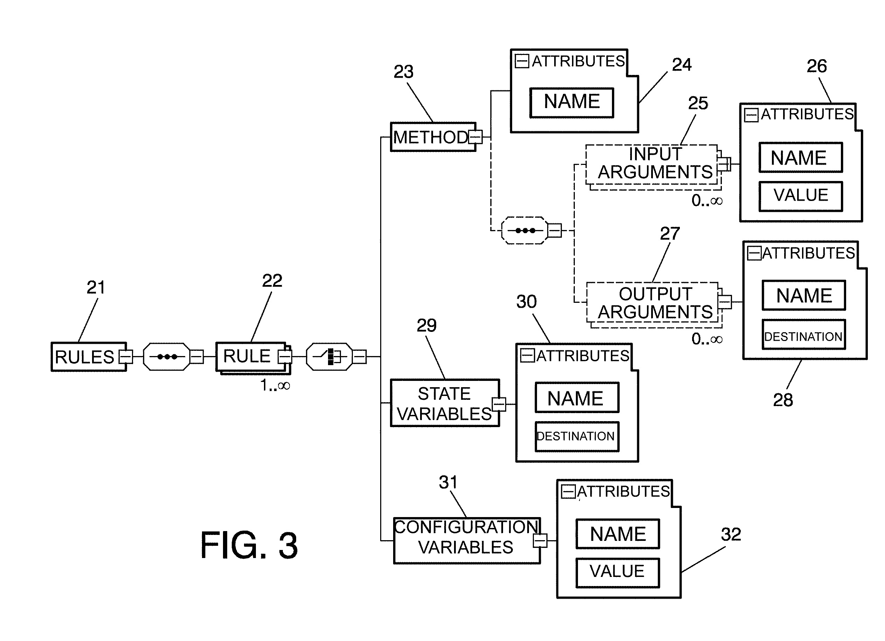

As shown in Figure 3, the file is organized in a list of "rules" (21) which must be executed by the device type management modules (4, 5, 6). A "rule" (22) can be one of these three types:
- "Method" rules (23): this type of rule will invoke the device method specified in "name" (24) with a list of input arguments, specified in the "input arguments" list (25). Each argument has a name and a value, specified in "name" and "value" (26), respectively. The method will obtain a list of output arguments, specified in the "output arguments" list (27). For each output argument specified in "name" (28), its value is stored in the topology, specifically in the location specified in "destination" (28).
- "State variables" rules (29): the value of the state variable of the device the name of which is specified in "name" (30) is obtained with this type of rule and it will be stored in the topology, in the property specified in "destination" (30).
- "Configuration variables" rules (31): this type of rule is used to add static information in the topology device. It stores the value expressed in "value" (32) in the topology, in the property specified in "name" (32).

The data management module (7) is capable of managing the internal database storing the network topology. It also translates the model information from an LDM level (only virtual devices) to an NTM model with physical and virtual devices, grouping the virtual devices in physical devices according to the IP and MAC addresses. For example, a multimedia disc can be considered an IP (virtual) device and a UPnP (virtual) device, and both are grouped in the same physical device.

This block can only be accessed through the NTM module (3) to obtain information about the devices stored in the network topology database and update the network topology with device information with respect to new devices that have been discovered or to update the device information with respect to an existing device.

When the data management module is started, it registers its NTM data management interface in the system. This interface allows the NTM module to use its entire functionality.

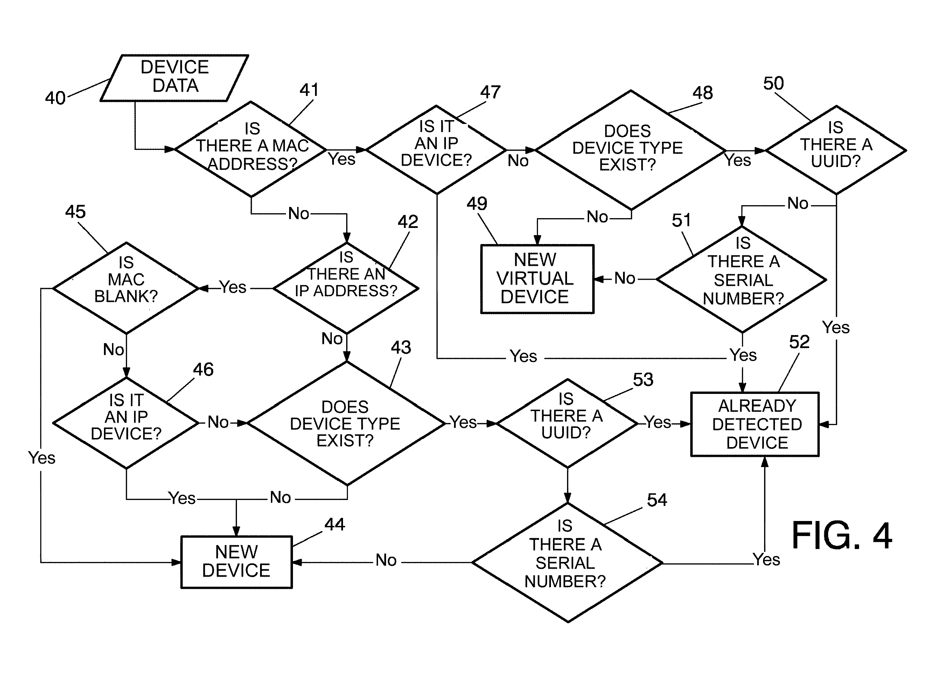

In a preferred embodiment of the invention, the algorithm used by this block for the purpose of storing the information relating to the devices in the topology can be seen in Figure 4. The algorithm works as follows:
- When a new device is detected (40), its properties are compared with all the devices that have previously been detected. The main piece of data used in the comparison is the MAC address (41) of the device.
- If the MAC address is the same as that of an already previously detected device, it can then be assumed that both devices are the same physical device. If said new device is an IP device (47) (these devices only have MAC and IP addresses as device data) and no other data is available, it goes to an "already detected device" (52) and the algorithm ends, labeling the device as active if it was previously labeled as inactive.
- If the device is not an IP device, it can be an "already detected device" (52) if it is an existing device type with the same UUID (50) or serial number (51), or a "new virtual device" (49) if the device type was not previously detected for that physical device (48).
- If the MAC address has not been previously stored (41), its IP address is compared with the IP addresses of the already discovered devices (42). If the IP address of the device is not the same as the IP addresses of the already discovered devices (or the IP address is blank in the case of home automation devices), the UUID (53) or the serial number (54) is used to know whether it is an "already detected device" (52) (generally home automation devices or in a piece of equipment with several network interfaces) or a "new device" (44). If the IP address coincides with an already existing address (42) and the MAC address is blank (45), a "new device" (44) is created and the IP address of the previously detected device is eliminated because it was incorrect or old. If the MAC address is not blank (45), the IP address of the previously detected device is erased as in the preceding case, and then it is ascertained whether it is a "new device" (44) or a virtual device of the same existing type (43), its UUID (53) and serial number (54) are compared to know whether it is an "already detected device" (52) or a "new device" (44).

The notification module (8) is used by the NTM module (3) to notify external entities (2) registered in the system of possible changes occurring in the network topology, for example, a new device appears in or disappears from the network, or when changes in the state of any device occur. When this occurs, the notification module (8) searches in the system for all the implementations of the NTM event listening interface and invokes it, such that any entity executing this interface will be notified of the changes in the network topology. For the purpose of allowing the NTM module (3) to be able to use this functionality, when the notification module (8) is started it registers its NTM notification interface in the system.

The local device management LDM module (9) is responsible for discovering the devices existing in the home network and for notifying the NTM module (3) of said discoveries. It also allows the NTM module (3) to obtain device information with respect to discovered devices and to manage all the network topology devices.

To carry out these tasks, the local device management module (9) offers an abstract and generic interface to the NTM module (3) that allows working with different device types in a similar and easy manner, so the NTM module does not need to know the specific management problems of the different device types, particularly in relation to the communication protocol used for discovering and handling a specific device type. The local device management module (9) conceals all this complexity through specific protocol adapters (10, 11, 12) that are capable of discovering and managing different device types (such as IP devices, UPnP devices, home automation devices, etc.).

The interfaces presented by this block are as follows:
- LDM publication capture interface: this is the interface that other components need to use if they want to be notified of discovered or disconnected devices in the network.
- LDM description interface: this interface provides detailed information about the devices found and allows other components to access this information.
- LDM control interface: this interface is used for invoking actions provided by the devices connected to the network.

The protocol adapters (10, 11, 12) implement specific protocols to be able to communicate with a specific device type. When they discover a new device type in the home network, whatever that type may be, they notify the local device management module (9) of such discovery. They are accessed through said local management module for obtaining information about a specific device or for invoking a service provided by the mentioned device.

In a preferred embodiment of the invention, three protocol adapter types have been envisaged:
- UPnP protocol adapter (11) for managing the UPnP devices using the UPnP protocol.
- Home automation adapter (12) for managing non-IP devices through a home automation proxy which must use standard protocols, for example ZWave or Zigbee, for communicating with the home automation devices.
- IP protocol adapter (10) for discovering IP devices in general which are not compatible with any other specific protocol type. These devices are discovered through the ARP protocol.

The protocol adapters present the following interfaces:
- PA publications capture interface: this interface must be applied to any entity that needs notifications of changes in the devices through the protocol adapter, such as the local device management module (9) for example.
- PA layer description interface: this interface is applied to any entity that needs to obtain information directly from the network devices, such as the local device management module (9) for example.
- Layer control interface: this interface is applied to any entity that needs to invoke methods in network devices, such as the local device management module (9) for example.
- Layer event interface: if the network devices have state variables that must be notified to an entity when they change, this interface must be applied to said entity, such as the local device management module (9) for example.

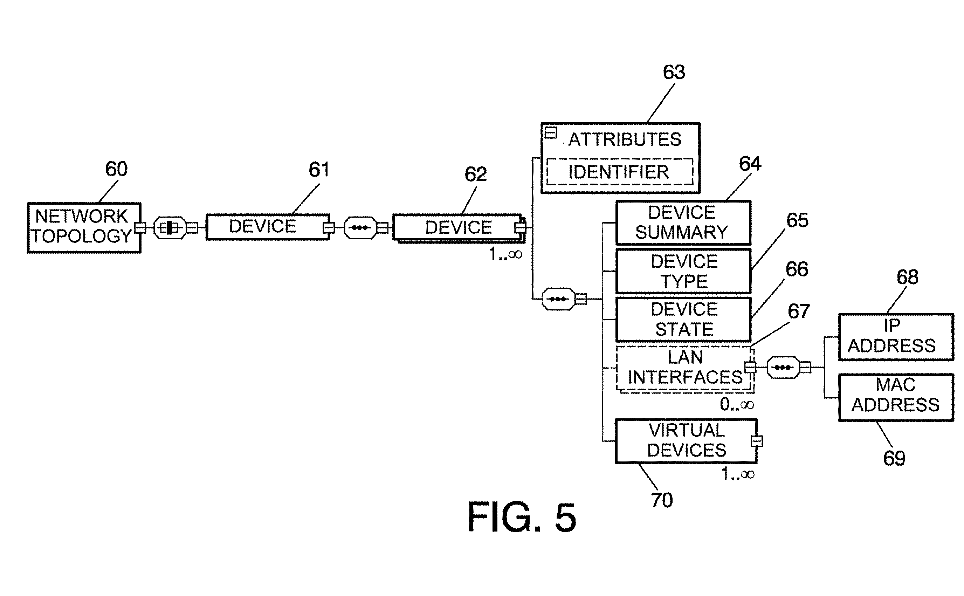

Figures 5, 6 and 7 illustrate how the network topology information is stored in the system.

As can be seen in Figure 5, the "network topology" (60) is structured in a set of physical devices, "device" node (61), for example, a PC, a MediaPlayer, an Ethernet disc, etc.

Each physical device (62) contains the following information:
- an "identifier" (63) unequivocally identifying the device.
- a "device summary" (64) defining the set of functionalities implemented by this device. This is directly related to the virtual devices that a physical device can have.
- a "device type" (65) identifying the detected device type.
- a "device state" (66) identifying the device state, enabled, error and disabled.
- a set of "LAN interfaces" (67) representing the LAN interfaces of the device, each including the "IP address" (68) and "MAC address" (69).
- a set of "virtual devices" (70) which are the functional or virtual devices that can exist at the same time in a single device. For example, a PC can have a UPnP multimedia server and a UPnP media player.

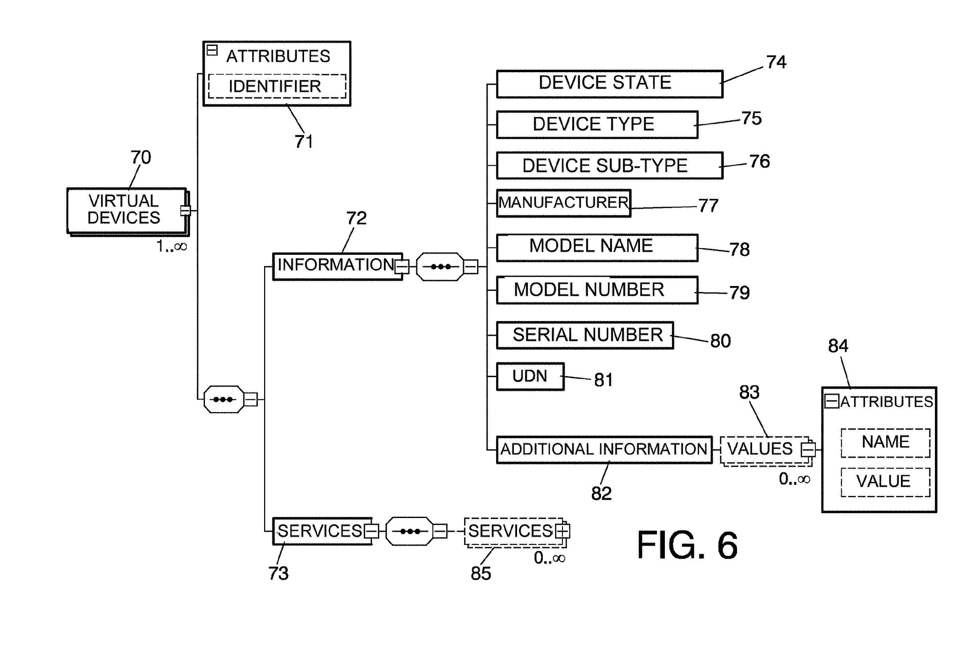

As can be seen in Figure 6, each virtual device, "virtual device" node (70), has the following information:
- an "identifier" node (71) uniquely identifying the virtual device.
- an "information" node (72) having the following information about each device:
   - "device state" (74) storing the virtual device state, enabled, error and disabled.
   - "device type" (75) storing the virtual device type: IP, UPnP, home automation, etc. The device types envisaged in the preferred embodiment are "IP", "UPnP" and "Home automation", but this list could be extended for a specific application.
   - "device sub-type" (76) storing the virtual device sub-type. These are the device sub-types envisaged for each "device type" in a preferred embodiment, but this list could be extended for a specific application:
      o For an "IP" "device type", an "IP" "device sub-type"
      o For a "UPnP" "device type", a "device sub-type" selected from a media player, a media server and a wireless network camera.
      o For a "home automation" "device type", a "device sub-type" selected from a smart meter, a smart connector and a switch.
   - a "manufacturer" node storing the device manufacturer's name
   - a "model name" node (78) storing the device model name.
   - a "model number" node (79) storing the device model number.
   - a "serial number" node (80) storing the device serial number.
   - a "UDN" node (81) storing the device UDN when it is a UPnP device.
   - an "additional information" node (82) storing a list of device "names" and "values" (84) which can be used to extend the topology when needed. The devices usually publish generic parameters stored in the "information" node (72), but they can also publish specific additional parameters. These parameters are different depending on the device type and sub-type, and may or may not be used by the NTM module depending on the cases of use that must be applied. This node stores an extensible list with all these specific parameters.
   - a "services" node (73) storing information about the services offered by each device.

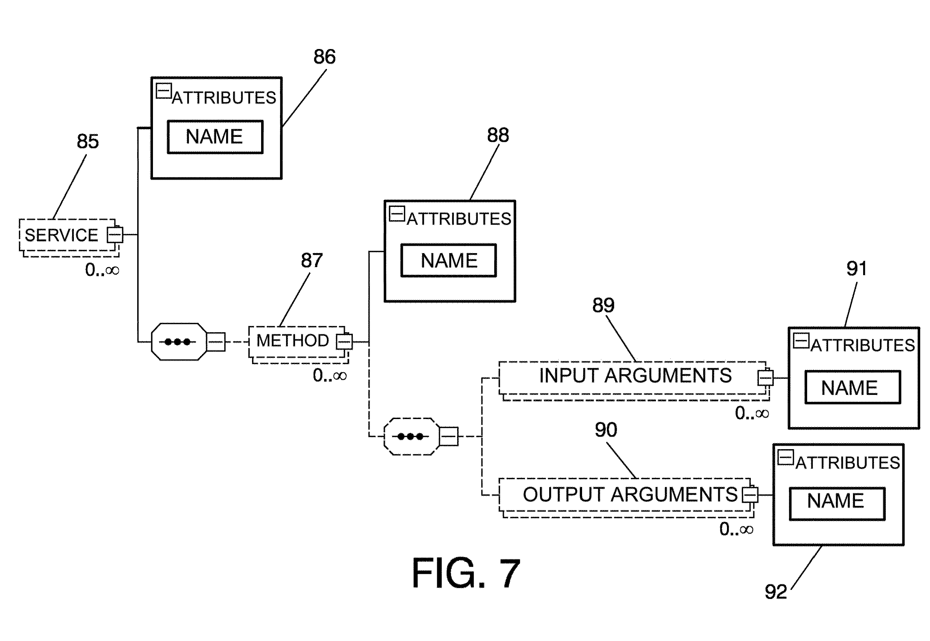

As can be seen in Figure 7, each "service" (85) contains the following information:
- a "name" node (88) storing the name of the service.
- a set of "method" nodes (87) representing the methods offered by the service. Each method has a "name" node (88) representing its name, a set of input arguments, "input arguments" node (89), and a set of output arguments, "output arguments" node (90).

Having described the primary elements forming the system, its interfaces and internal operation, as well as the data topology model, the method for managing network topology in home networks and the interactions between the modules of the system for the purpose of providing system functionalities are described below.

The main functionality provided by the invention consists of being capable of managing the home network topology. This functionality consists of three different steps which are related to one another.
- The discovery of devices is always the first step; the devices have to be discovered in order to be managed. This step also includes storing the device information with respect to the device in the network topology and notifying subscribed external entities of the discovery of devices.

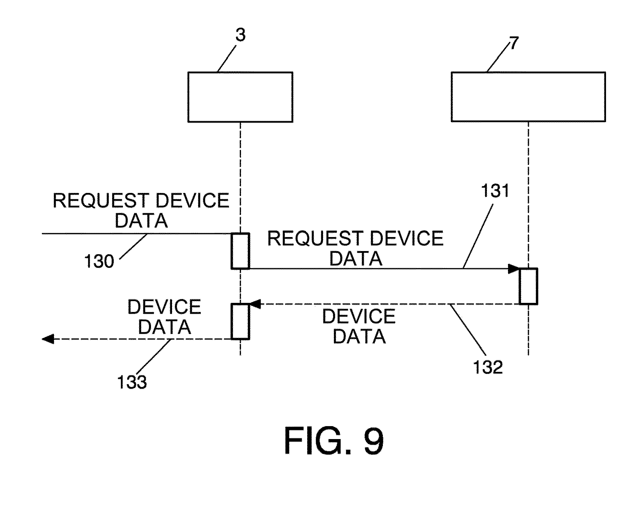

When a new device is discovered (100) by one of the protocol adapters (10, 11, 12), a new event is sent (101) by the corresponding protocol adapter (10, 11, 12) to the local device management module (9). At the same time, this event is forwarded (102) to the NTM module (3). Depending on the detected device type, the NTM module (3) searches for a device type module (5) that is capable of managing this device type. When it finds it, the NTM module requests basic device information (103) from the device type module (5). The device type module (5) obtains the necessary device information: basic data (106, 107), supported protocols (110, 111) and published services (114, 115) of the devices making requests: obtaining basic device data (104, 105), obtaining protocol information (108, 109) and obtaining device services (112, 113), all by using the local device management module (9), which in turn obtains this information by invoking similar methods of the corresponding protocol adapter (10, 11, 12). When the device type module (5) has obtained all this information, it returns it to the NTM module (116). The NTM module stores (117) this information in the network topology by means of the data management module (7). Before saving the device information in the network topology, the data management module (7) checks if the device has already been previously detected (118); if it was previously detected, it updates the device data in the network topology, and if it has not been detected yet, it creates a new device in the network topology and stores its information and notifies the NTM module (119) of this. The NTM module (3) notifies (120) the external entities (2) registered for events through the notification module (8). Finally, the notification module (8) sends a return notification (121) of the previously sent notification (120) to the NTM module (3) and a return event message (122) of the previously sent event (101) is sent to the protocol adapters (10, 11, 12).
- Obtaining device information is the second step, as shown in Figure 9. External entities request (130) all the device data from NTM module (3), including the configuration parameters and the presented methods. Sometimes, it simply obtains topology information, and sometimes it can involve invoking an action in the device for the purpose of obtaining updated information.

When an external device (2) wants information (130) of a device it uses the NTM description interface provided by the NTM module (3) to obtain it. The NTM module obtains (131) the requested network topology database information through the data management interface provided by the data management module (8) and forwards it (132, 133) to the external entity (2).
- Invoking the action of a device is the third step. The external entities can request that the NTM module invoke an action in a device for the purpose of obtaining information about it or for executing a configuration or operation.

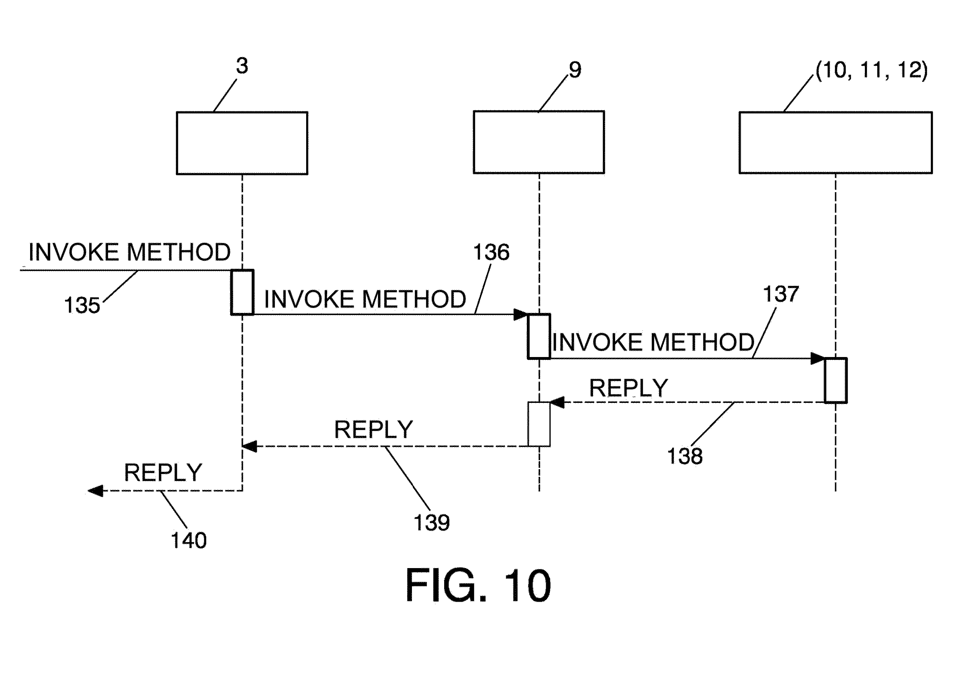

Figure 10 shows the sequence diagram of how the external entities (2) can invoke actions in a device.

When an external entity wants to invoke a method of a service offered by a device, it will invoke (135) the NTM device control interface provided by the NTM module (3), which in turn uses (136) the LDM control interface provided by the local device management module (9), and said local device management module will use (137) the PA layer control interface provided by the corresponding protocol adapter (10, 11, 12) for invoking said method. Once the reply of the device is obtained, this reply is forwarded (138,139,140) to the external entity.

## Claims

1. A system for managing network topologies in home networks, where said system is integrated in an execution environment available in at least one device of a home network and where it has at least one interface publication service, **characterized in that** said system comprises:
• a network topology management module comprising means for coordinating the remaining modules of the system, means for detecting devices connected to the home network by means of interaction with at least one protocol adapter and means for storing and managing home network topology information by means of interaction with a data management module;
• a local device management module comprising providing at least one interface so that the network topology management module establishes communication with the devices connected to the home network and additionally comprising means for notifying the network topology management module of changes in the home network topology;
• a data management module comprising a network topology database storing the home network topology, means for managing said database, and additionally comprising a data management interface for communicating with the network topology management module;
• at least one device type network topology management module comprising a mapping management interface whereby the network topology management module obtains device information with respect to the devices connected to the home network;
• a notification module sending notifications to modules external to the system which have previously subscribed to said notifications when changes occur in the network topology by means of an NTM event capture interface provided by the network topology management module; and,
• at least one protocol adapter comprising a conventional interface for communicating with the devices connected to the home network.

2. The system for managing network topologies in home networks according to claim 1, **characterized in that** the network topology management module provides the following interfaces to modules external to the system:
• an NTM description interface comprising modules external to the system obtaining a list of devices detected in the home network and information about such devices stored in the network topology database;
• an NTM device control interface comprising modules external to the system accessing services provided by the devices connected to the home network; and,
• an NTM event capture interface implemented by external modules for receiving notifications of new devices connected to the home network, devices disconnected from the home network and changes in said device information stored in the network topology database.

3. The system for managing network topologies in home networks according to claim 1, **characterized in that** the at least one device type network topology management module is selected from:
• a UPnP module;
• a non-IP home automation module; and,
• an IP module supporting IP protocols exclusively.

4. The system for managing network topologies in home networks according to claim 1, **characterized in that** the local device management module provides the following interfaces to the system:
• an LDM publication capture interface reporting events selected from devices which are connected to the home network and devices which are disconnected from the home network;
• an LDM description interface providing detailed device information with respect to the devices which are connected to the home network to those devices requesting said information; and,
• an LDM control interface requesting services provided by the devices connected to the network.

5. The system for managing network topologies in home networks according to claim 1, **characterized in that** the at least one protocol adapter is selected from:
• a UPnP protocol adapter handling UPnP devices by means of a UPnP protocol;
• a home automation protocol adapter managing non-IP home automation devices by means of a home automation proxy using standard protocols; and,
• an IP protocol adapter managing IP devices, which support IP protocols exclusively, by means of an ARP protocol.

6. The system for managing network topologies in home networks according to claim 1, **characterized in that** the at least one protocol adapter comprises providing the system with the following interfaces:
• an AP publication capture interface implemented by the local topology management module for receiving notifications of changes in the devices sent from the at least one protocol adapter;
• an AP layer description interface implemented by the local topology management module for directly receiving device information with respect to the devices connected to the home network;
• an AP layer control interface implemented by the local topology management module for managing the services offered by the home network devices; and,
• an AP layer event interface implemented by the local topology management module for receiving notifications of changes in state variables in home network devices.

7. A method for managing network topology in home networks for the system defined in any one of claims 1 to 6, **characterized in that** it comprises the following phases:
• the network topology management module detecting events selected from devices which are connected to the home network and devices which are disconnected from the home network, by means of at least one protocol adapter integrated in said system and said devices being selected from physical devices and virtual devices;
• storing device information with respect to the devices detected in the home network in the network topology database by means of the data management module;
• sending notifications about detected devices and the modifications in said detected device information stored in the network topology database to modules external to the system previously subscribed to said notifications;
• any other module external to the system obtaining device information with respect to any device connected to the home network by means of accessing the home network topology database whenever it requests it; and,
• requesting the execution of services offered by one of the devices connected to the home network from any other module external to the system.

8. The method for managing network topology in home networks according to claim 7, **characterized in that** in the phase of detecting devices and when the at least one protocol adapter has previously detected a device connected to the home network, said method comprises the following steps:
• sending a notification from the at least one protocol adapter that has detected the device connected to the home network to the local device management module;
• forwarding said notification from the local device management module to the network topology management module;
• the network topology management module requesting information about additional protocols, data and services supported by the detected device from the corresponding device type network topology management module depending on the detected device type;
• forwarding said request from the device type network topology management module to the protocol adapter that has detected the device so that it can request the requested information from the detected device through the local device management module;
• sending said information from the protocol adapter to the network topology management module through the local device management module;
• sending said information from the network topology management module to the management module;
• the management module checking which device type has been detected, said device type being selected from a new physical device, a new virtual device and a previously detected device, and storing the information received from the topology management module in the preceding step in the network topology database through the data management module; and,
• sending a notification that a new device has been detected in the topology from the network topology management module to the notification module sending notifications to modules external to the system by means of the notification module.

9. The method for managing network topology in home networks according to claim 7, **characterized in that** the phase of checking which device type has been detected and storing the information relating to said device when the detected device is a physical device comprises the following phases:
• the data management module receiving a notification with information relating to the detected device;
• checking that the MAC address of the detected device is not stored in the network topology database;
• verifying that the IP address of the detected device is stored in the network topology database;
• verifying that the MAC address of the detected device is blank;
• storing the information relating to the detected device in the network topology database;
• verifying that the detected device is an IP-type device and storing the information relating to the detected device in the network topology database when the MAC address is not blank;
• checking that the IP address of the detected device is not stored in the network topology database and if the detected device type is not previously stored in the network topology database, storing the information relating to the detected device in the network topology database;
• storing the information relating to the detected device in the network topology database when it is not an IP device and when the detected device type is additionally not previously stored in the network topology database; and,
• storing the information relating to the detected device in the network topology database when it has been verified that the device type exists and neither its identifier nor its serial number is stored in said database.

10. The method for managing network topology in home networks according to claim 7, **characterized in that** the phase of storing detected device information when the detected device is a virtual device comprises the following phases:
• the data management module receiving a notification with information relating to the new detected device;
• verifying that the MAC address of the detected device is stored in the network topology database;
• checking that the detected device is not an IP-type device;
• verifying that the device type is previously stored in the network topology database and storing the information relating to the detected device in the network topology database when neither its identifier nor its serial number is previously stored in said database; and,
• storing the information relating to the detected device in the network topology database when it is obtained in the preceding phase of verification that the device type is not previously stored in the network topology database.

11. The method for managing network topology in home networks according to claim 7, **characterized in that** the phase of storing detected device information when the device was already previously detected comprises the following phases:
• the data management module receiving a notification with information relating to the new detected device;
• verifying that the detected device has a MAC address and additionally verifying that it is an IP-type device and updating the information relating to the device in the network topology database;
• verifying that the MAC address of the detected device is stored in the network topology database and if it is not an IP-type device, verifying that it is of a type previously registered in the network topology database, and additionally verifying that its identifier is stored in said database, and then updating the information relating to the device in the network topology database;
• verifying that the MAC address of the detected device is stored in the network topology database and if it is not an IP-type device, verifying that it is of a type previously registered in the network topology database, and further verifying that its serial number is stored if its identifier is not stored in said database, to update the information relating to the device in the network topology database;
• verifying that the MAC address of the detected device is not stored in the network topology database, that the IP address of the detected device is not stored in said database, that the device type is registered in the database and that additionally the identifier is also registered, and then updating the information relating to the device in the network topology database; and,
• verifying that the MAC address of the detected device is not stored in the network topology database, that the IP address of the detected device is not stored in said database, that the device type is registered in the database and additionally verifying that the serial number of said device is registered if the identifier is not registered, and then updating the information relating to the device in the network topology database.

12. The method for managing network topology in home networks according to claim 8, **characterized in that** after the phase of the data management module verifying that the device has not been previously detected, when it is obtained that the device is already previously detected, it comprises the following phases:
• updating the obtained device information in the network topology database through the data management module to which the obtained device information is sent from the network topology management module; and,
• sending a notification that a change has occurred in the information stored in the home network topology database from the network topology management module to the notification module, which in turn sends notifications to modules external to the system by means of the notification module.

13. The method for managing network topology in home networks according to claim 7, **characterized in that** the phase of obtaining device information comprises the following steps:
• at least one module external to the system sending an information request to the network topology management module by means of the NTM description interface;
• sending a device information request to the data management module by means of the data management interface provided by said data management module;
• accessing said information stored in the network topology database and sending the information to the network topology management module; and,
• sending said information from the network topology management module to the module external to the system that has requested the information.

14. The method for managing network topology in home networks according to claim 7, **characterized in that** the phase of requesting the execution of services offered by the devices connected to the home network comprises the following steps:
• sending a service request from a module external to the system to the network topology management module by means of the NTM device control interface;
• sending said request from the network topology management module to the local device management module by means of the LDM control interface;
• sending said request from the local device management module to the corresponding protocol adapter by means of the PA interface control interface; and,
• sending said request from the corresponding protocol adapter to the device offering the requested service.

15. The method for managing network topology in home networks according to claim 7, **characterized in that** when the at least one device type topology management module is started for the first time, it registers a mapping management interface in the system in which the device type it manages is specified, said device type being selected from a UPnP device, an IP device and a non-IP home automation device.

16. The method for managing network topology in home networks according to claim 7, **characterized in that** as a phase prior to detecting devices using the home network, the network topology management module registers a network topology management interface in the system whereby the elements internal and external to the system invoke said system.

17. The method for managing network topology in home networks according to claim 7, **characterized in that** as a phase prior to detecting devices which are connected to the home network, the notification module registers a notification interface in the system whereby it notifies modules external to the system of changes in the network topology.

18. The method for managing network topologies in home networks according to claim 7, **characterized in that** in the phase of storing information in the network topology database, said database comprises the following information for each detected home network device:
• a device identifier;
• a device summary comprising the functionalities implemented by said device;
• device type information, said information being selected from IP devices, UPnP devices and non-IP home automation devices;
• a device state identifying the device state selected from enabled, disabled and error;
• at least one local area network interface comprising the LAN interfaces of each device, where a device MAC address and a device IP address are stored for each interface; and,
• a listing of virtual devices comprising the virtual devices existing at the same time in the physical device.

19. The method for managing network topologies in home networks according to claim 18, **characterized in that** each memory position of the listing of virtual devices comprises at least the following information:
- a device identifier;
- device state information, said information being selected from enabled, disabled and error;
- virtual device type information, said information being selected from IP devices, UPnP devices and non-IP home automation devices;
- virtual device sub-type information;
- manufacturer information comprising the manufacturer's name;
- model information comprising the device model name;
- model number information comprising the device model number;
- device serial number information;
- device UDN information when it is a virtual UPnP device;
- additional information comprising a list of additional device parameters; and,
- a listing of services offered by the device.

20. The method for managing network topologies in home networks according to claim 19, **characterized in that** each memory position of the listing of services comprises at least the following information:
• a service identifier; and,
• a listing of processes offered by the service where a name, a listing of input arguments and a listing of output arguments, each of these arguments having an assigned name, are stored for each process.

21. The method for managing network topologies in home networks according to claim 19, **characterized in that** the information stored in the topology database is obtained and stored based on at least:
• a basic configuration information file comprising a list of properties of the home network devices, a list of values for being established in the network topology for each device, and a method for obtaining basic information common to all the devices registered in the network topology database; and,
• a rule-based additional configuration information file stored in a field called additional information, comprising a list of rules and defining a method for obtaining specific additional device information with respect to each device registered in the network topology database.

22. The method for managing network topologies in home networks according to claim 19, **characterized in that** when said device is a UPnP-type device, the virtual device sub-type is selected from a media player, a media server and a wireless network camera.

23. The method for managing network topologies in home networks according to claim 19, **characterized in that** when the device is a home automation-type device, the virtual device sub-type is selected from a smart meter, a smart connector and a switch.

24. The method for managing network topologies in home networks according to claim 19, **characterized in that** the virtual device sub-type is an IP sub-type when the device is an IP-type device.
